Europäisches Patentamt

European Patent Office

Office européen des brevets

(11) Numéro de publication: **0 523 139 B1**

(12) **FASCICULE DE BREVET EUROPEEN**

(45) Date de publication du fascicule du brevet: **06.09.95** (51) Int. Cl.6: **B62M 25/04**

(21) Numéro de dépôt: **91907478.1**

(22) Date de dépôt: **02.04.91**

(86) Numéro de dépôt internationale :
**PCT/FR91/00256**

(87) Numéro de publication internationale :
**WO 91/15393 (17.10.91 91/24)**

(54) **DISPOSITIF ET PROCEDE DE GESTION SYNCHRONISEE DE DERAILLEURS DE BICYCLETTE.**

<table>
<tr><td>(30) Priorité: <b>03.04.90 FR 9004250</b></td><td>(73) Titulaire: <b>SOCARD, Didier<br>5, quai des Coteaux<br>F-44640 Le Pellerin (FR)</b></td></tr>
<tr><td>(43) Date de publication de la demande:<br><b>20.01.93 Bulletin 93/03</b></td><td></td></tr>
<tr><td>(45) Mention de la délivrance du brevet:<br><b>06.09.95 Bulletin 95/36</b></td><td>(72) Inventeur: <b>SOCARD, Didier<br>5, quai des Coteaux<br>F-44640 Le Pellerin (FR)</b></td></tr>
<tr><td>(84) Etats contractants désignés:<br><b>BE CH DE FR LI</b></td><td>(74) Mandataire: <b>Dawidowicz, Armand<br>Cabinet Dawidowicz,<br>18, Boulevard Pereire<br>F-75017 Paris (FR)</b></td></tr>
<tr><td>(56) Documents cités:<br><b>FR-A- 2 530 573<br>US-A- 3 965 763<br>US-A- 4 201 095<br>US-A- 4 412 828</b></td><td></td></tr>
</table>

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

La présente invention concerne les dérailleurs pour bicyclette et plus particulièrement les dispositifs de commande de ces dérailleurs.

Les bicyclettes ou les cycles en général, sont de nos jours le plus souvent équipés d'un dérailleur arrière ou dérailleur de roue libre et d'un dérailleur avant ou dérailleur de pédalier.

Le dérailleur avant guide et positionne la chaîne sur deux ou trois plateaux. Le dérailleur arrière effectue une tâche similaire sur six à huit pignons. Il en résulte d'importants déplacements latéraux de la chaîne et cela augmente le risque de faire travailler la chaîne en torsion avec les inconvénients qui en découlent (mauvais rendement, saut de chaîne, usure des pièces, etc.). Cette même augmentation du nombre de rapports possibles génère une plus grande complexité dans le choix de ceux-ci et les erreurs sont fréquentes (changement de plateau entraînant un important surcroît d'effort, erreur de sens de manipulation des manettes, réflexion nécessaire avant de changer de vitesse, besoin de contrôler visuellement la position de la chaîne pour connaître l'action à mener).

Des dispositifs ont déjà été élaborés, tendant à résoudre ces différents problèmes mais aucun d'eux ne les résoud tous.

Par exemple, FR-A-2.530.573 a pour objet un dispositif de commande pour deux dérailleurs, comprenant deux organes d'actionnement reliés chacun à deux dérailleurs par un organe de transmission, dispositif comprenant un organe de manoeuvre de l'un des organes d'actionnement relié à l'autre organe d'actionnement par un mécanisme de liaison à course morte.

Cet agencement permet, par un organe de manoeuvre unique, de commander simultanément les deux dérailleurs et la liaison à course morte prévue dans la transmission permet de décaler la commande du dérailleur du pédalier par rapport à la commande du dérailleur de roue libre.

Un tel dispositif répond bien au problème de désalignement de la chaîne mais en engendrant un à-coup dans le pédalage dû à l'amplification de la brutalité d'un changement de plateau par un changement de pignon dans le même sens.

US-A-4.412.828 décrit un dispositif de commande simultanée d'un dérailleur avant à deux plateaux et d'un dérailleur arrière à cinq pignons au moyen d'un système à cames et suiveurs de came. Ce dispositif est conçu pour un actionnement pas-à-pas du dérailleur arrière jusqu'au pignon central et passage de plateau en restant sur ce pignon central, puis actionnement pas-à-pas pour les pignons restants. Ce dispositif connu utilise en pratique la moitié des pignons pour chaque plateau respectivement. Il est difficilement transposable aux dérailleurs modernes à trois plateaux et plus de cinq pignons. En outre, la commande simultanée est continue, ce qui engendre une course importante de l'organe de commande et un encombrement élevé de l'ensemble.

US-A-3.965.763 décrit un dispositif de commande simultanée de dérailleurs, par exemple à deux plateaux et cinq pignons, assurant les dix rapports de cette combinaison. Ce système, qui nécessite des changements presque alternés de plateau avec des passages simultanés d'un ou plusieurs pignons, assure un rapport de transmission variant de manière continue. Ce dispositif, qui serait d'une complication extrême pour un plus grand nombre de rapports de transmission, ne se préoccupe pas de l'inclinaison de la chaîne.

En outre, tous les dispositifs connus (par exemple US-A-4.201.095) sont commandés par une manette ou une poignée pouvant occuper autant de positions qu'il y a de vitesses utiles, de sorte que le cycliste doit prendre garde à la position effective de la manette avant de l'actionner dans un sens ou dans l'autre. De plus, comme on l'a indiqué à propos de US-A-4.412.828, un tel dispositif est encombrant du fait de la grande course de l'organe de commande.

La présente invention a notamment pour but de remédier à cet inconvénient en proposant un montage qui rend transparent pour l'utilisateur tous déplacements relatifs des dérailleurs, lesquels déplacements, peuvent être commandés par impulsion.

A cet effet, l'invention concerne un dispositif de gestion de deux dérailleurs pour bicyclette dont le cycle de l'un assure le passage de la chaîne d'un plateau à un autre plateau du pédalier et le cycle de l'autre assure le passage de la chaîne d'un pignon à un autre pignon de la roue libre, comprenant des moyens d'actionnements reliés aux deux dérailleurs par des moyens de transmission, ainsi qu'un premier organe apte à parcourir un cycle de déplacement des deux dérailleurs simultanément, agissant en combinaison avec un second organe apte à fixer les positions initiales de chacun des cycles (US-A-4 412 828), caractérisé en ce que ledit premier organe est une came entrainée en rotation par rapport au second organe sous l'action des moyens d'actionnement, et agissant par rapport à un élément d'une partie fixe du dispositif, dont la réaction engendre un déplacement d'une partie mobile du dispositif portant au moins un desdits organes, et de laquelle sont solidaires les moyens de transmission, le déplacement s'effectuant simultanément à la rotation du premier organe, de manière à assurer une traction simultanée et de même sens sur lesdits moyens de transmission, tout en provoquant un déplacement d'un de ces moyens.

Selon une caractéristique de l'invention, la partie mobile porte d'une part le premier organe ou came et d'autre part le second organe constitué par un cylindre, duquel cylindre sont solidaires les moyens de transmission et dont la rotation provoquée par les moyens d'actionnement engendre, par l'intermédiaire d'un démultiplicateur, la rotation de la came.

Selon un mode de réalisation de l'invention, la came s'articule en rotation autour d'un axe fixe solidaire de la partie mobile, par l'intermédiaire d'un trou circulaire à partir du centre duquel sont réalisés une pluralité de trous logeant des moyens d'indexation de rayon r et orthogonaux entre eux, dont les centres s'inscrivent sur un cercle de rayon R et à une distance variable de bord de la came respectivement égale à $X+r+R$, $X+r+R+Y$, $X+r+R+2Y$, etc., pour constituer un programme choisi.

L'invention concerne également un procédé perfectionné de gestion simultanée de deux dérailleurs.

L'invention sera encore illustrée sans être aucunement limitée par la description qui suit, faite en regard des dessins annexés sur lesquels :

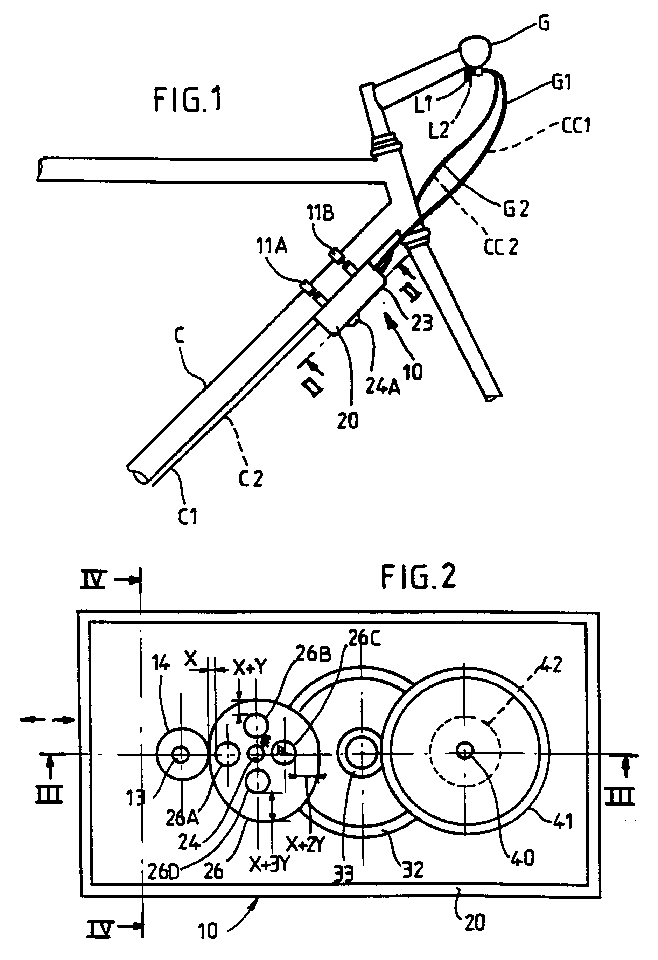

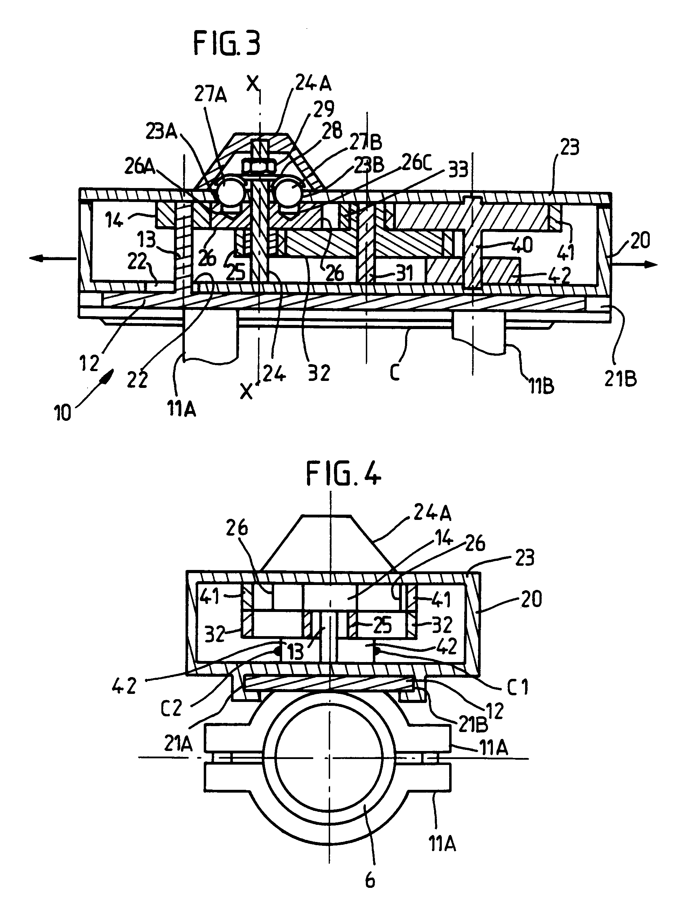

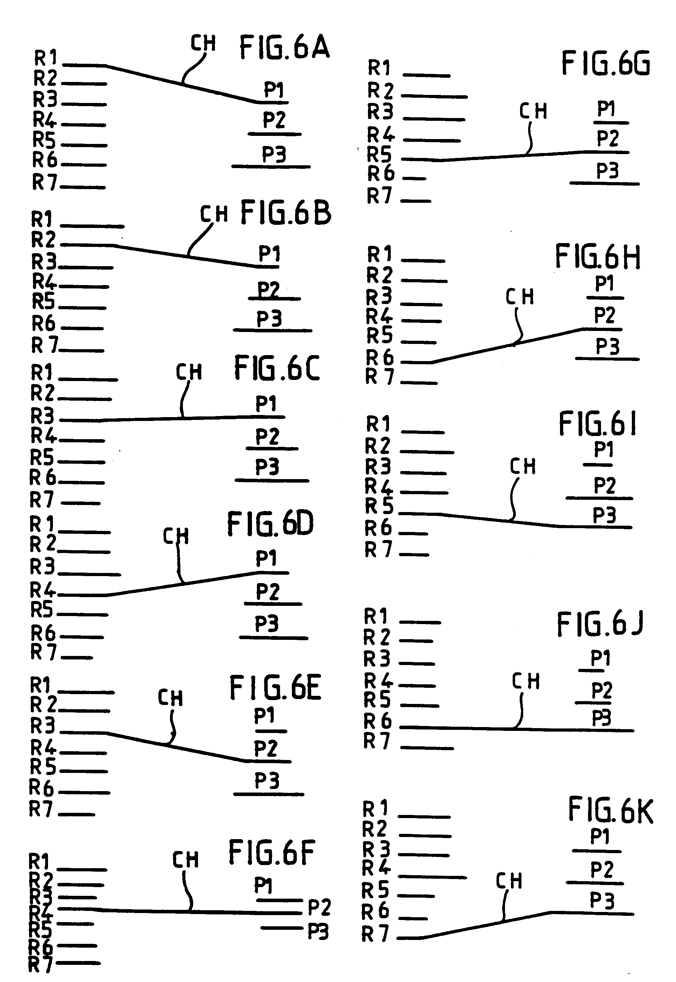

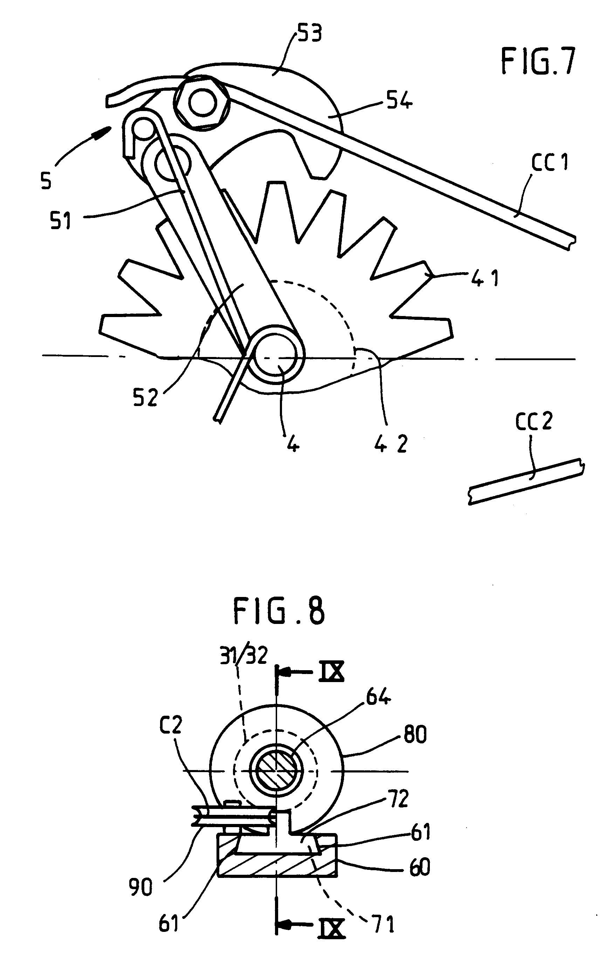

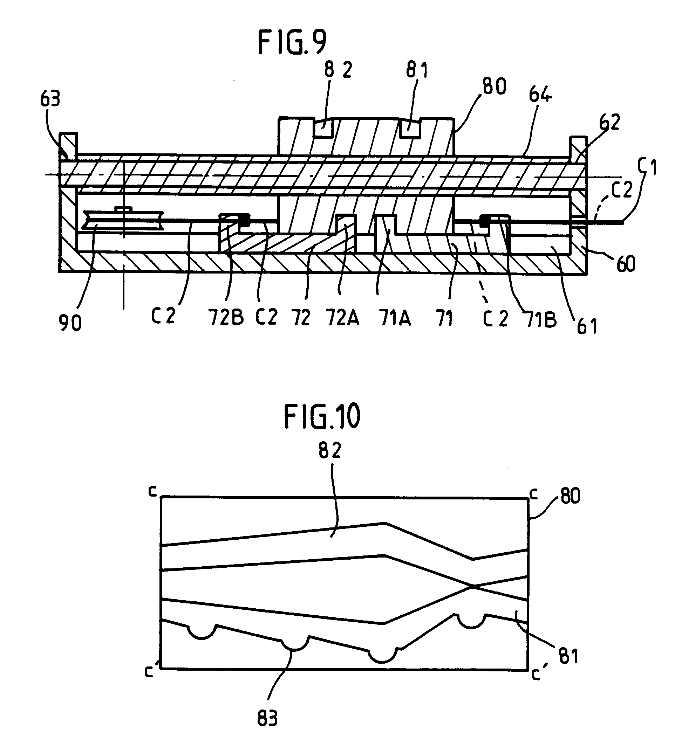

La figure 1 est une vue partielle d'une bicyclette montrant latéralement un dispositif de gestion selon l'invention; la figure 2 est une vue en coupe selon la ligne II-II de la figure 1 selon un premier mode de réalisation de l'invention; la figure 3 est une vue en coupe suivant la ligne III-III de la figure 2; la figure 4 est une vue en coupe suivant la ligne IV-IV de la figure 2; les figures 5A à 5K représentent de manière schématique les positions relatives successives des éléments de commande d'un dispositif selon l'invention lors du passage du rapport le plus court au plus long; les figures 6A à 6K montrent schématiquement les positions successives de la chaîne dans les séquences correspondant aux figures 5A à 5K; la figure 7 montre à titre d'exemple un dispositif de commande de la succession des séquences 5A à 5K; la figure 8 est une vue en coupe transversale d'un dispositif de gestion selon un second mode de réalisation de l'invention; la figure 9 est une vue en coupe selon la ligne IX-IX de la figure 8, et la figure 10 est une vue développée d'un cylindre du dispositif selon les figures 8 et 9 dans lequel sont menagées des rainures en forme de rampe.

La figure 1 montre une partie d'un cadre de cycle C muni d'un guidon G, par rapport auxquels ont été disposés, de façon très schématique (voir figures 6a à 6K), trois plateaux de pédaliers P1, P2, P3 et une roue libre qui comporte 7 pignons R1, R2, R3, R4, R5, R6, R7.

Deux mécanismes de dérailleurs (non représentés) qui peuvent être de conception et de construction classiques sont prévus pour faire passer la chaîne CH d'un pignon R à l'autre et d'un plateau P à l'autre.

Ces deux dérailleurs sont actionnés respectivement par des moyens de transmission constitués par les câbles $C_1$ et $C_2$. La figure 1 ne montre que le départ de ces câbles.

Le dispositif de commande est constitué de moyens d'actionnement, en l'occurence deux leviers L1 et L2, montés par tout moyen convenable de part et d'autre du guidon G. Ces leviers ont pour fonction, lorsqu'ils sont sollicités, d'exercer une traction sur des câbles de commande CC1 (respectivement CC2) qui sont logés dans des gaines, de type ordinaire, G1 (respectivement G2) qui guident les câbles jusqu'au dispositif de gestion 10 des dérailleurs. Ces leviers sont donc constitués, de manière connue, d'un dispositif de fixation au guidon ou à la poignée de frein, d'une butée de gaine fixe, d'un dispositif de blocage de goupille de câble et de traction de cette goupille qui est articulé autour d'un axe et qui ne sera pas décrit ici.

L'autre extrémité de chaque câble CC1 et CC2 aboutit à l'intérieur du dispositif de gestion de dérailleurs.

Ce dispositif de gestion de dérailleurs est fixé au cadre par tout moyen convenable, deux colliers 11A et 11B dans cet exemple, de préférence sur le tube diagonal du cadre C, en un emplacement adapté pour ne pas gêner le déplacement de la roue avant et du garde-boue.

Le dispositif de gestion 10 comprend une table de guidage 12 formant un parallélépipède rectangle sur laquelle vient se fixer, de manière amovible, un axe de rotation 13 qui supporte une butée 14 libre en rotation autour de cet axe et, éventuellement, un ou deux dispositifs d'ajustement de déplacement (non figurés sur les dessins), destinés à démultiplier les déplacements initiaux des câbles $C_1$ et $C_2$ pour les adapter au déplacement requis par chaque dérailleur qui lui est associé (ce déplacement pouvant varier d'un modèle de dérailleur à l'autre). Ces dispositifs d'ajustement peuvent être des poulies à étagement ou des bras de leviers ou tout autre moyen convenable.

Un boîtier 20 vient se glisser sur la table 12 par l'intermédiaire de glissières 21A et 21B, lorsque l'axe 13 est ôté. Une lumière 22 est pratiquée dans la base du boîtier 20 pour autoriser le montage de l'axe 13 et le déplacement longitudinal du boîtier 20 par rapport à la table 12.

Le boîtier 20 comporte un couvercle amovible 23 qui s'y fixe par tout moyen convenable. Le boîtier 20 comporte en outre un axe cylindrique 24 sur lequel viennent s'enfiler une roue dentée 25 et une came 26. La came 26 vient en appui sur la butée 14 sous l'action de la tension des câbles $C_1$ et $C_2$. La came 26 est percée de quatre trous 26A, 26B, 26C, 26D répartis tous les 90° sur un cercle dont le centre est situé sur l'axe 24.

En fonction de la rotation de la came 26 autour de l'axe 24, ces quatre perçages reçoivent alternativement des billes 27A et 27B d'un diamètre supérieur au diamètre des trous 26A à 26D. Ces billes 27A et 27B sont guidées en déplacement linéaire par des perçages ajustés 23A et 23B pratiqués dans le couvercle 23. Ces billes sont appuyées sur la came 26 par l'intermédiaire d'un ressort 28 dont la pression est réglée par le serrage plus ou moins important d'un écrou 29 sur l'axe 24.

L'ensemble des pièces 24, 26, 27, 28 et 29, avec les trous de guidage 23A et 23B, permet donc une indexation en rotation de la came 26, tous les 90°.

La came 26 a un contour particulier qui répond aux critères suivants :

- lors d'une rotation de 90°, de la position correspondant au rayon le plus faible vers la position suivante, ce rayon augmente d'une valeur Y ;
- lors d'une rotation similaire à partir de cette nouvelle position, il en va de même ;
- pareillement une troisième fois ;
- lors de la rotation similaire suivante, son rayon diminue subitement de 3Y pour revenir au contour initial après un tour complet.

Ce contour particulier de la came 26 ainsi défini est une des caractéristiques essentielles de l'invention.

Un couvercle 24A se visse sur l'axe 24 pour assurer une protection aux salissures de l'intérieur du boîtier 20, tout en autorisant un accès facile au réglage de la dureté de l'indexation de la came 26.

Une roue dentée 25, solidaire de la came 26, entraîne en rotation la roue dentée 32 (et vice-versa) elle-même solidaire de la roue dentée 33. Ces deux dernières sont montées sur un axe de rotation 31 solidaire du boîtier 20. La roue dentée 33 entraîne en rotation la roue dentée 41 (et vice-versa) qui est elle-même solidaire en rotation d'un cylindre 42. La roue 41 et le cylindre 42 sont solidaires d'un axe 40 apte à tourillonner dans le boîtier 20. Le cylindre 42 supporte, de part et d'autre de sa périphérie (fig.4), les câbles $C_1$ et $C_2$, par tout moyen usuel connu propre à les maintenir.

Ces câbles $C_1$ et $C_2$ sont ensuite guidés vers les organes d'ajustement évoqués plus haut (s'ils existent) puis actionnent de façon conventionnelle les déformations des dérailleurs arrière et avant du cycle.

La roue dentée 41 et le cylindre 42 sont commandés simultanément en rotation par un dispositif de commande 5 constitué d'un levier 52 articulé sur l'axe 40, entraîné dans un débattement angulaire sous l'action en traction du câble CC1 ou CC2 par l'intermédiaire d'une pièce 53 sur laquelle est fixée l'extrémité du câble CC1 et qui est rappelé élastiquement par un organe élastique 51 en forme d'épingle.

La traction du câble CC1 provoque, par l'intermédiaire d'un cliquet 54 de la pièce 53, une rotation de la roue dentée 41 et du cylindre 42 dans le sens inverse d'une traction du câble CC2.

La traction de CC1 (ou CC2) cause donc une rotation de la roue dentée 41 et du cylindre 42 comprise entre 0° et, au minimum, un tiers de la rotation totale possible de cet ensemble (41, 42), ceci de manière à franchir au moins une position de la came 26. Après traction du câble CC1 (ou CC2), l'organe élastique 51 ramène le levier L1 (ou L2) à sa position initiale par l'intermédiaire du câble CC1 (ou CC2).

Après le retour du levier L1 ou L2 actionné, la pièce à cliquet 54 autorise la rotation de l'ensemble 41-42 dans n'importe quel sens sans l'action d'une traction du câble CC1 ou du câble CC2 sous réserve que le cylindre 42 n'ait pas atteint une de ses positions extrêmes.

Le cylindre 42 est destiné à provoquer l'enroulement des câbles $C_1$ et $C_2$ autour d'un rayon qui vérifie l'équation suivante :

- soit D la démultiplication causée par la succession des roues dentées 25, 32, 33 et 41 :

$$D = Nb\ dents\ 41.Nb\ dents\ 32/(Nb\ dents\ 33.Nb\ dents\ 25) ;$$

- Y est le déport de la came 26 tel que défini ci-dessus ;
- R est le rayon de la came 42 recherché, alors : $R = 2.Y.D:Pi$.

On constate donc que l'ensemble des roues dentées vise à éviter un enroulement des câbles $C_1$ et $C_2$ autour d'un trop petit rayon, ce qui serait source de problèmes de précision et d'usure, compte-tenu de la rigidité desdits câbles.

Le fonctionnement du dispositif de gestion qui vient d'être décrit est le suivant :
Si l'on considère tout d'abord que la chaîne occupe la position repérée sur la figure 6A, qui correspond au rapport de démultiplication minimal possible, les pièces 14, 26, 42, $C_1$ et $C_2$ occupent les positions schématisées en figure 5A, c'est-à-dire à éloignement maximum.

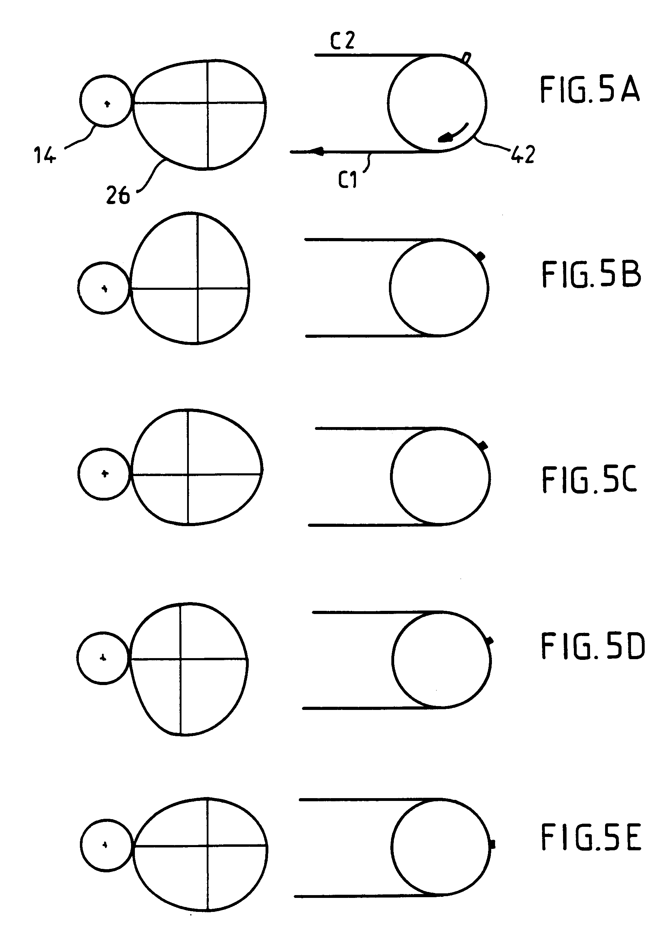

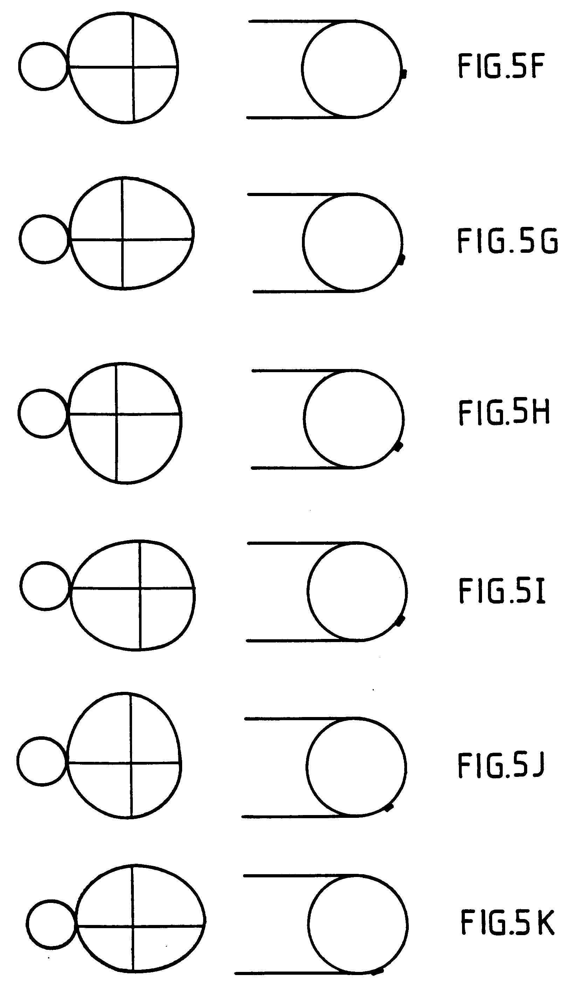

Une action élémentaire AE1, exercée sur la roue dentée 41 et la came 42 par le levier L1 au moyen du câble CC1 relié à l'organe de commande tel que décrit plus haut, fait tourner le cylindre 42 de 90°/D, ce qui entraîne la rotation de la came 26 de 90°. Ces nouvelles positions correspondent alors à la figure 5B. Le câble $C_1$ est donc soumis aux déplacements suivants :

- déroulement d'autour de la came 42 d'une longueur Y, ce qui provoque un déplacement de l'ensemble par rapport à l'axe fixe 13 vers le dérailleur associé, à savoir le dérailleur arrière.

- rapprochement de l'axe de 42 d'une longueur Y en raison de la rotation de la came 26 (c'est encore un déplacement vers le dérailleur associé).

Donc le câble $C_1$ se déplace vers le dérailleur qui lui est associé d'une longueur de 2.Y.

Dans le même temps le câble $C_2$ est soumis aux déplacements suivants :

- enroulement autour de 42 d'une longueur Y (à l'opposé du dérailleur) ;
- rapprochement de l'axe de 42 d'une longueur Y (vers le dérailleur).

Donc le câble $C_2$ ne se déplace pas.

En fonction des organes d'ajustement, éventuellement présents, cela conduit à :

- déformation du dérailleur arrière qui provoque le passage de la chaîne du pignon R1 au pignon R2;
- aucune variation de position du dérailleur avant.

Cette nouvelle position de la chaîne est représentée sur la figure 6B.

A partir de cet état, l'action inverse (-AE1) ramène à la position précédente.

A partir des positions repérées en figures 5B et 6B, une nouvelle action élémentaire AE1 cause les nouvelles positions du cylindre 42 et de la came 26 représentées en figure 5C. Comme à l'étape décrite plus haut, $C_1$ se déplace d'une longueur 2.D vers son dérailleur associé et $C_2$ reste immobile. Par conséquent, la chaîne occupe la position vue en figure 6C. Et une nouvelle action AE1 aboutit aux positions des pièces vues en figure 5D et à une position de la chaîne figure 6D.

Ensuite, et c'est là que se situe une caractéristique majeure de l'invention, une nouvelle action élémentaire AE1 va provoquer un résultat très différent de celui des actions précédentes :

- la came 42 et la came 26 vont occuper les positions repérées sur la figure 5E. Ces nouvelles positions provoquent les déplacements suivants :
- Pour le câble $C_1$ :
  . déroulement d'autour de 42 d'une longueur Y (vers le dérailleur) ;
  . éloignement de l'axe de 42 d'une longueur 3.Y (à l'opposé du dérailleur) ;

  Bilan : éloignement du dérailleur d'une longueur de 2.Y, ce qui provoque la remontée d'un pignon (de R4 vers R3);
- Pour le câble $C_2$ :
  . déroulement autour de 42 d'une longueur de Y (à l'opposé du dérailleur) ;
  . éloignement de l'axe de 42 d'une longueur de 3.Y (à l'opposé du dérailleur) ;

  Bilan : éloignement du dérailleur d'une longueur de 4.Y, ce qui est de nature, en usant éventuellement des organes d'ajustement, à déformer le dérailleur avant pour provoquer le passage du plateau P1 au plateau P2.

La nouvelle position de la chaîne est repérée sur la figure 6E.

A partir de là, la séquence 5E, 5F, 5G, 5H, 5I équivaut à la séquence 5A, 5B, 5C, 5D, 5E et conduit aux positions de chaînes visibles sur les figures respectives 6E, 6F, 6G, 6H, 6I.

Et pour finir, la séquence 5I, 5J, 5K équivaut à la séquence 5A, 5B, 5C ce qui donne les positions de chaîne repérées en 6I, 6J, 6K.

La position extrême de la chaîne correspondant au rapport le plus long est alors atteinte.

Compte-tenu du dispositif de commande décrit plus haut, il est possible à chaque position de la chaîne d'exercer une commande AE1 ou -AE1 qui aboutit à la position de la chaîne suivante (ou précédente), ou d'exercer une commande de plus forte amplitude, ce qui permet de modifier plus rapidement la position de la chaîne en franchissant plusieurs étapes en une seule fois.

On dispose donc ainsi au total de onze rapports différents convenablement étagés. Le passage d'un rapport plus long vers un rapport plus court (ou l'inverse) s'effectue par une action élémentaire sur le levier de droite (ou de gauche). L'alignement optimal de la chaîne est toujours respecté. La course de l'organe de commande permet de passer plusieurs rapports à la fois si souhaité. L'indexation permet de placer systématiquement les dérailleurs pour que la chaîne s'engrène parfaitement dans le pignon et le plateau choisis.

Bien entendu, de nombreuses autres variantes combinant un déplacement linéaire avec un enroulement de câble conduisent similairement au but poursuivi et de multiples autres montages que celui proposé peuvent être envisagés. De même, la combinaison de roues dentées peut être remplacée par tout autre système analogue ou par l'utilisation d'un câble plus souple pour relier le cylindre 42 au dispositif d'ajustement. Ce dispositif d'ajustement des longueurs autorise le montage de n'importe quel dérailleur sur le cycle mais n'est pas obligatoire. Les cames 26 et 42 peuvent être conçues pour provoquer des déplacements adéquats des câbles qui correspondent aux changements de position de la chaîne. Enfin, le dispositif de commande est quelconque, pourvu qu'il réponde aux critères énoncés. Le retour des leviers L1 et L2 en position initiale après action n'est pas indispensable mais est très préférable d'un point de vue ergonomique.

Selon une variante de réalisation représentée sur les figures 8, 9 et 10, le dispositif de gestion diffère essentiellement du précédent en ce qu'il est constitué d'une table fixe 60 solidaire du cycle soit sur le cadre C par l'intermédiaire de deux colliers comme dans l'exemple précédent, soit sur le guidon G du cycle, la commande s'effectuant alors directement en tournant la poignée dans un sens ou dans l'autre, ce qui entraîne la succession des opérations en évitant la nécessité de prévoir un autre dispositif d'actionnement.

Dans cette table 60 est ménagée une rainure longitudinale 61 constituant un organe de guidage en translation de deux chariots 71 et 72.

Deux paliers 62 et 63 autorisent le montage d'une tige filetée 64, de pas spécial, qui est immobilisée par rapport à la table 60.

Un cylindre 80 vient se visser par l'intermédiaire d'un trou fileté central sur la tige 64. La périphérie du cylindre 80 est creusée de deux rainures en forme de rampe 81 et 82 dont le développé est illustré à la figure 10.

La rainure 81 reçoit à sa partie inférieure l'ergot 71A solidaire du chariot 71, tandis que la rainure 82 reçoit similairement l'ergot 72A du chariot 72.

Le chariot 71 (ou 72) est pourvu d'un blocage de goupille de câble de dérailleur classique 71B (ou 72B) et peut donc exercer une traction sur le câble $C_1$ (ou $C_2$) qui commande le dérailleur arrière (ou avant). Pour des besoins de commodité, une poulie 90 renvoie le câble $C_2$ afin qu'il sorte du même côté du dispositif que le câble $C_1$.

Des organes d'ajustement des longueurs nécessaires à chaque dérailleur peuvent être installés sur le dispositif en reprenant le montage correspondant décrit pour le système précédent, en remarquant toutefois que la poulie 90 peut s'adapter pour remplir cette fonction sur le câble $C_2$. Ces organes d'ajustement n'ont pas été représentés sur ces figures.

Le fonctionnement de ce dispositif va être maintenant décrit à l'aide des figures 6A à 6K, 8, 9 et 10.

En position de départ, la chaîne occupe sur les pignons la position repérée sur la figure 6A. Le dispositif est actionné par une action élémentaire AE1 qui aboutit à faire tourner le cylindre 80 de 90° autour de la tige filetée 64. Cette rotation entraîne les effets suivants :

- Pour le câble $C_1$ :
  . déplacement de l'ergot 71A par rapport au cylindre à rampes 80 sous l'action de la rainure 81 qui n'est pas dans le plan perpendiculaire à l'axe 64 et freinage de l'ergot 71A dans le creux 83 de la rainure 81 pour constituer une indexation en rotation du cylindre 80 tous les 90°.
  . ce déplacement vaut une longueur L vers la droite de la figure 9.
  . simultanément, le cylindre 80 se visse sur la tige filetée 64 et, compte-tenu du pas et de l'orientation des filets, cela provoque un déplacement de ladite came d'une longueur L vers la droite de la figure 9.

En conclusion, le câble $C_1$ se déplace d'une longueur 2L vers la droite.

- Pour le câble $C_2$ :
  . la rainure 82 étant orientée de manière symétrique à la rainure 81,
  . le chariot 72 a un mouvement relatif par rapport au cylindre 80 d'une longueur L vers la gauche de la figure 9. Simultanément, le cylindre 80 se déplace de L vers la droite de la figure 9.

En conclusion, le câble $C_2$ ne se déplace pas au cours de cette première action élémentaire.

Ces déplacements sont de nature à provoquer les déformations des dérailleurs arrière et avant du cycle qui aboutissent à positionner la chaîne ainsi que représenté sur la figure 6B.

Une nouvelle action élémentaire AE1 provoque les mêmes effets et aboutit à la position de chaîne repérée en figure 6C; et une nouvelle fois pour aboutir à la position de la figure 6D.

La quatrième action élémentaire AE1 aboutit à des résultats différents de ceux des actions précédentes :

- Pour le câble $C_1$ :
  . la rainure 81 provoque un mouvement relatif de l'ergot 71A d'une amplitude 3L par rapport à la came 80 vers la gauche de la figure 9. Ce mouvement est compensé par le vissage de la came 80 sur l'axe 64 qui entraîne ladite came de L vers la droite de la figure 9.

En conclusion, le câble $C_1$ se déplace d'une longueur 2L vers la gauche de la figure 9.

- Pour le câble $C_2$ :
  . la rainure 82 provoque un mouvement relatif de l'ergot 72A d'une amplitude 3L vers la droite de la figure 9 et le vissage de la came 80 sur l'axe 64 ajoute L à ce déplacement.

En conclusion, le chariot 72 se déplace d'une longueur 4L vers la droite de la figure 9.

Ces déplacements simultanés des câbles $C_1$ et $C_2$ sont de nature à déformer les dérailleurs arrière et avant du cycle pour aboutir à la position de la chaîne repérée à la figure 6E.

De nouvelles actions élémentaires AE1 provoquent ensuite le déroulement du même cycle de déplacement des deux dérailleurs à partir de cette nouvelle position de départ.

On voit donc que, dans ce montage, la tige filetée 64 constitue l'organe qui fixe les positions initiales de chaque départ de cycle de mouvement des dérailleurs, tandis que les rainures 81 et 82 disposées sur la came 80 constituent les organes qui parcourent le cycle de déplacement du dérailleur arrière (pour la rainure 81) et du dérailleur avant (pour la rainure 82).

Ce nouveau montage est donc un autre exemple d'application du principe général défini au préalable.

Conventions d'écriture :

X = Nombre de descentes du dérailleur arrière avant une montée.

LR = Longueur de câble à déplacer pour obtenir le changement d'un pignon à l'arrière.

LCR = Longueur de câble déplacée sous l'action de l'organe qui décrit le cycle de fonctionnement du dérailleur arrière.

LIR = Longueur de câble déplacée sous l'action de l'organe qui définit les conditions initiales de chaque cycle du dérailleur arrière.

Les notations sont similaires pour le dérailleur avant en remplaçant le R par un V.

Fonctionnement du dérailleur arrière :

Lors d'une descente de pignon, on a : LR = LCR + LIR et ainsi X fois.

Lors d'une montée de pignon, on a : -LR = -X.LCR + LIR

On en tire :

$$LCR = 2.LR/(X + 1)$$
$$LIR = LR.(X - 1)/(X + 1)$$

Fonctionnement du dérailleur avant :

Lors d'une invariance, on a : LCV - LIV = 0 et ainsi X fois.

Lors d'un changement de plateau, on a : LV = X.LCV + LIV

On en tire :

$$LCV = LV/(X + 1)$$
$$LIV = LV/(X + 1)$$

Le dispositif qui vient d'être décrit peut comporter diverses variantes. Le boîtier de commande peut être monté sur le guidon, moyennant quelques aménagements, et porter directement les organes de commande, afin de permettre à l'utilisateur de ne pas quitter le guidon et d'obtenir un ensemble simplifié, plus facile à monter, et moins encombrant.

C'est ainsi que le boîtier 20 à déplacement linéaire peut être remplacé par une poutre à mouvement pendulaire. La position de l'axe de pivotement de cette poutre pourra être choisie de manière à limiter l'effort d'appui sur la came, afin de faciliter la rotation de cette dernière.

Au lieu d'une action directe sur les câbles $C_1$ et $C_2$ par la pièce 20, coulissante ou oscillante, on peut prévoir de fixer sur cette pièce 20 les butées ou tendeurs de chacune des gaines de ces câbles

$C_1$ et $C_2$. L'appui de la pièce 20 sur la came 26 est alors provoqué par la tension des câbles eux-mêmes. Un dispositif amortisseur peut être prévu pour diminuer cet appui, en particulier lors des passages de la came du rayon le plus faible au rayon le plus élevé durant une rotation de 90°. Le déplacement des gaines est équivalent à un déplacement des câbles dans l'exemple représenté.

## Revendications

1. Dispositif de gestion de deux dérailleurs pour bicyclette dont le cycle de l'un assure le passage de la chaîne d'un plateau à un autre plateau du pédalier et le cycle de l'autre assure le passage de la chaîne d'un pignon à un autre pignon de la roue libre, comprenant des moyens d'actionnements reliés aux deux dérailleurs par des moyens de transmission ($C_1$, $C_2$), ainsi qu'un premier organe (26, 80) apte à parcourir un cycle de déplacement des deux dérailleurs simultanément, agissant en combinaison avec un second organe (42, 64) apte à fixer les positions initiales de chacun des cycles,
caractérisé en ce que ledit premier organe est une came (26, 81, 82) entraînée en rotation par rapport au second organe (42, 64) sous l'action des moyens d'actionnement, et agissant par rapport à un élément d'une partie fixe (12, 60) du dispositif, dont la réaction engendre un déplacement d'une partie (20, 71, 72) du dispositif portant au moins un desdits organes, et sur laquelle sont solidaires les moyens de transmission ($C_1$, $C_2$), le déplacement s'effectuant simultanément à la rotation du premier organe (26, 80), de manière à assurer une traction simultanée et de même sens sur lesdits moyens de transmission ($C_1$, $C_2$), tout en provoquant un déplacement d'un de ces moyens par rapport à l'autre dans une direction ou dans l'autre selon un programme choisi.

2. Dispositif selon la revendication 1,
caractérisé en ce que ladite came (26) a un contour particulier qui répond aux critères suivants:
   - lors d'une rotation de 90°, de la position correspondant au rayon le plus faible vers la position suivante, ce rayon augmente d'une valeur Y ;
   - lors d'une rotation similaire à partir de cette nouvelle position, il en va de même ;
   - pareillement une troisième fois ;
   - lors de la rotation similaire suivante, son rayon diminue subitement de 3Y pour revenir au contour initial après un tour complet.

3. Dispositif selon l'une des revendications 1 et 2, caractérisé en ce que ladite partie mobile (20) est montée coulissante.

4. Dispositif selon l'une des revendications 1 et 2, caractérisé en ce que ladite partie mobile (20) est montée oscillante.

5. Dispositif selon l'une des revendications 1 à 3, caractérisé en ce que la partie mobile (20) porte d'une part le premier organe ou came (26) et d'autre part le second organe (42) constitué par un cylindre, duquel cylindre sont solidaires les moyens de transmission ($C_1$, $C_2$) et dont la rotation provoquée par les moyens d'actionnement (L1, L2) engendre, par l'intermédiaire d'un démultiplicateur (25, 32, 33, 41), la rotation de la came (26).

6. Dispositif selon la revendication 5 , caractérisé en ce que le démultiplicateur (25, 32, 33, 41) est un train d'engrenages.

7. Dispositif selon l'une des revendications 1 à 6 , caractérisé en ce que la came (26) s'articule en rotation autour d'un axe fixe (24) solidaire de la partie mobile (20), par l'intermédiaire d'un trou circulaire à partir du centre duquel sont réalisés une pluralité de trous (26A, B, C, D) logeant des moyens d'indexation de rayon $\underline{r}$, et orthogonaux entre eux, dont les centres s'inscrivent sur un cercle de rayon R et à une distance variable du bord de la came (26) respectivement égale à $X+r+R$, $X+r+R+Y$, $X+r+R+2Y$, etc., pour constituer un programme choisi.

8. Dispositif selon la revendication 7, caractérisé en ce que les moyens d'indexation sont constitués par au moins une bille (27A et 27B) de diamètre supérieur aux trous (26A, B, C, D) sur lesquels elles sont en appui et qui sont guidées en déplacement linéaire dans des perçages ajustés (23A, 23B) pratiqués dans une paroi formant couvercle de la partie mobile (20) du dispositif, lesdites billes (27A, 27B) étant en appui élastique sur la came (26) par un organe élastique (28).

9. Dispositif selon la revendication 8 , caractérisé en ce que l'organe élastique (28) est réglé en pression par serrage plus ou moins important d'un écrou (29) se vissant à une extrémité libre de l'axe (24).

10. Dispositif selon la revendication 3 , caractérisé en ce que la partie mobile (20) du dispositif se déplace sur une partie fixe solidaire d'un élément du cycle par l'intermédiaire de glissières (21A, 21B) longitudinales.

11. Dispositif selon la revendication 3, caractérisé en ce que la partie mobile est constituée de deux chariots (71, 72) aptes à coulisser simultanément dans une rainure longitudinale (61) d'une table fixe (60) dans un sens ou dans l'autre sous l'action conjuguée de deux rampes périphériques (81, 82) non orthogonales par rapport à l'axe d'un cylindre (80) sur lequel elles sont ménagées, cylindre (80) qui est apte à translater sur une tige filetée fixe (64), lors d'une commande en rotation exercée sur lui, les rampes (81, 82) étant en prise respectivement avec des ergots (71A et 72A) des chariots (71, 72) sur lesquels sont fixés les moyens de transmission ($C_1$, $C_2$).

12. Dispositif selon l'une des revendications 1 et 2, caractérisé en ce que les butées ou tendeurs des gaines des câbles ($C_1$, $C_2$) sont solidaires de ladite partie mobile (20).

**Claims**

1. Control device for two bicycle derailleurs, the cycle of one of them passing the chain from one front chain wheel to another front chain wheel, and the cycle of the other passing the chain from one cog to another cog on the free wheel, comprising actuation means connected to the two derailleurs by transmission means ($C_1$, $C_2$), and a first member (26, 80) suitable for passing through a movement cycle for the two derailleurs simultaneously, acting in combination with a second member (42, 64) suitable for fixing the initial positions of each of the cycles, characterised in that the said first member is a cam (26, 81, 82) rotated with respect to the second member (42, 64) under the action of the actuation means, and acting in relation to an element of a fixed part (12, 60) of the device, whose reaction gives rise to a movement of a part (20, 71, 72) of the device carrying at least one of the said members, and to which are fixed the transmission means ($C_1$, $C_2$), the movement taking place simultaneously with the rotation of the first member (26, 80), so as to provide simultaneous traction in the same direction on the said transmission means ($C_1$, $C_2$), whilst causing a movement of one of these means with respect to the other in one direction or the other according to a chosen programme.

2. Device according to Claim 1, characterised in that the said cam (26) has a particular contour which meets the following criteria:
   - during a 90° rotation, from the position corresponding to the smallest radius to the following position, this radius increases by a value Y;
   - during a similar rotation from this new position, the same is true;
   - likewise a third time;
   - during the following similar rotation, its radius falls suddenly by 3Y, to return to the initial contour after a complete rotation.

3. Device according to one of Claims 1 and 2, characterized in that the said movable part (20) is mounted so as to slide.

4. Device according to one of Claims 1 and 2, characterized in that the said movable part (20) is mounted so as to rock.

5. Device according to one of Claims 1 to 3, characterized in that the movable part (20) carries, on the one hand, the first member or cam (26) and, on the other hand, the second member (42) formed by a cylinder, to which cylinder are attached the transmission means ($C_1$, $C_2$) and whose rotation, caused by the actuation means (L1, L2), gives rise, through a reduction gear (25, 32, 33, 41), to the rotation of the cam (26).

6. Device according to Claim 5, characterized in that the reduction gear (25, 32, 33, 41) is a gear train.

7. Device according to one of Claims 1 to 6, characterized in that the cam (26) pivots in rotation about a fixed shaft (24) attached to the movable part (20), by means of a circular hole, from the centre of which there are produced a plurality of holes (26A, B, C, D) housing indexing means of radius $r$, mutually orthogonal, whose centres lie on a circle of radius R and at a variable distance from the edge of the cam (26), equal, respectively, to $X+r+R$, $X+r+R+Y$, $X+r+R+2Y$, etc, to form a chosen programme.

8. Device according to Claim 7, characterized in that the indexing means are formed by at least one ball (27A and 27B) whose diameter is greater than that of the holes (26A, B, C, D) upon which they bear and which are guided in linear movement in matching apertures (23A, 23B) formed in a wall forming a cover for the movable part (20) of the device, the said balls (27A, 27B) being held elastically against the cam (26) by an elastic member (28).

9. Device according to Claim 8, characterized in that the pressure of the elastic member (28) is regulated by a greater or lesser tightening of a nut (29) screwed on a free end of the pin (24).

10. Device according to Claim 3, characterized in that the movable part (20) of the device moves on a fixed part attached to an element of the cycle by means of longitudinal runners (21A, 21B).

11. Device according to Claim 3, characterized in that the movable part consists of two carriages (71, 72) suitable for sliding simultaneously in a longitudinal groove (61) in a fixed table (60) in one direction or in the other under the joint action of two peripheral ramps (81, 82), non-orthogonal with respect to the axis of a cylinder (80) on which they are formed, a cylinder (80) which is suitable for moving in translation on a fixed threaded rod (64) when a rotation command is issued to it, the ramps (81, 82) being engaged respectively with lugs (71A and 72A) on the carriages (71, 72) to which the transmission means ($C_1$, $C_2$) are fixed.

12. Device according to one of Claims 1 and 2, characterized in that the stops or sheath tensioners of the cables ($C_1$, $C_2$) are fixed to the said movable part (20).

**Patentansprüche**

1. Vorrichtung zur Bedienung von zwei Gangschaltungen für Fahrräder, wobei der Arbeitsgang der einen für den Übergang der Kette von einem Tretlagerzahnkranz auf einen anderen Tretlagerzahnkranz und der Arbeitsgang der anderen für den Übergang der Kette von einem Ritzel auf ein anderes Ritzel des freien Rades sorgt, mit Betätigungsmitteln, die mit den zwei Gangschaltungen durch Übertragungsmittel (C1, C2) verbunden sind, sowie mit einem ersten Organ (26, 80), das geeignet ist, gleichzeitig einen Verstellzyklus der zwei Gangschaltungen zu durchlaufen, wobei es in Kombination mit einem zweiten Organ (42, 64) wirkt, das geeignet ist, die Anfangspositionen jedes der Arbeitsgänge zu fixieren, **dadurch gekennzeichnet**, daß das erste Organ ein Kurventeil (26, 81, 82) ist, das in Bezug zu dem zweiten Organ (42, 64) unter der Wirkung von Betätigungsmitteln drehangetrieben ist und das in Bezug zu einem Element eines festen Teiles (12, 60) der Vorrichtung wirkt, dessen Reaktion eine Verschiebung eines Teiles (20, 71, 72) der Vorrichtung bewirkt, das wenigstens eines der Organe trägt und mit dem die Übertragungsmittel (C1, C2) fest verbunden sind, wobei sich die Verschiebung gleichzeitig mit der Drehung des ersten Organes (26, 80) vollzieht, um ein gleichzeitiges Ziehen an den Übertragungsmitteln (C1, C2) in derselben Richtung zu erzielen, wobei eine Verschiebung eines dieser Mittel in Bezug zu dem anderen in eine oder die andere Richtung gemäß einem ausgewählten Programm hervorgerufen ist.

2. Vorrichtung nach Anspruch 1, **dadurch gekennzeichnet**, daß das Kurventeil (26) eine besondere Kontur aufweist, die den folgenden Kriterien entspricht:
   - bei einer Drehung um 90° aus der Position, die dem geringsten Radius entspricht, in die folgende Position vergrößert sich dieser Radius um einen Wert Y;
   - bei einer ähnlichen Drehung ausgehend von dieser neuen Position verändert er sich in der gleichen Weise;
   - in gleicher Weise ein drittes Mal;
   - bei der folgenden ähnlichen Drehung verringert sich sein Radius plötzlich um 3Y, um nach einer vollständigen Umdrehung zu der anfänglichen Kontur zurückzukehren.

3. Vorrichtung nach einem der Ansprüche 1 und 2, **dadurch gekennzeichnet**, daß das bewegliche Teil (20) gleitend montiert ist.

4. Vorrichtung nach einem der Ansprüche 1 und 2, **dadurch gekennzeichnet**, daß das bewegliche Teil (20) schwingend montiert ist.

5. Vorrichtung nach einem der Ansprüche 1 bis 3, **dadurch gekennzeichnet**, daß das bewegliche Teil (20) einerseits das erste Organ oder das Kurventeil (26) und andererseits das zweite Organ (42), das durch einen Zylinder gebildet ist, trägt, wobei mit dem Zylinder die Übertragungsmittel (C1, C2) fest verbunden sind und wobei die Drehung des Zylinders durch Betätigungsmittel (L1, L2) hervorgerufen ist und vermittels eines Untersetzungsgetriebes (25, 32, 33, 41) die Drehung des Kurventeiles (26) bewirkt.

6. Vorrichtung nach Anspruch 5, **dadurch gekennzeichnet**, daß das Untersetzungsgetriebe (25, 32, 33, 41) ein Zahnradgetriebe ist.

7. Vorrichtung nach einem der Ansprüche 1 bis 6, **dadurch gekennzeichnet**, daß das Kurventeil (26) drehbar um eine feste, mit dem beweglichen Teil (20) fest verbundene Achse (24) vermittels eines kreisförmigen Loches gelagert ist, ausgehend von dessen Zentrum eine Mehrzahl von Löchern (26A, B, C, D) gebildet ist, die Einrastmittel mit einem Radius r aufnehmen und zueinander orthogonal sind, wobei die Zentren der Löcher entlang eines Kreises mit Radius R und mit einem jeweils unterschiedlichen Abstand zu dem Rand des Kurventeiles (26) angeordnet sind, der X + r + R, X + r + R + Y, X + r + R + 2Y usw. entspricht, um ein ausgewähltes Programm zu bilden.

8. Vorrichtung nach Anspruch 7, **dadurch gekennzeichnet**, daß die Einrastmittel durch wenigstens eine Kugel (27A und 27B) mit einem Durchmesser gebildet ist, der größer als der Durchmesser der Löcher (26A, B, C, D) ist, an denen sie anliegen und für eine lineare Verschiebung in ausgerichteten Bohrungen (23A, 23B) geführt sind, die in einer Wandung, die eine Abdeckung des beweglichen Teiles (20) der Vorrichtung bildet, gebildet sind, wobei die Kugeln (27A, 27B) sich durch ein elastisches Organ (28) in elastischer Anlage an dem Kurventeil (26) befinden.

9. Vorrichtung nach Anspruch 8, **dadurch gekennzeichnet**, daß der Anpreßdruck des elastischen Organs (28) durch mehr oder weniger weites Anziehen einer Mutter (29) einstellbar ist, die an ein freies Ende der Achse (24) angeschraubt ist.

10. Vorrichtung nach Anspruch 3, **dadurch gekennzeichnet**, daß sich das bewegliche Teil (20) der Vorrichtung vermittels Längsgleitführungen (21A, 21B) an einem festen Teil verschiebt, das mit einem Element des Zweiradfahrzeuges fest verbunden ist.

11. Vorrichtung nach Anspruch 3, **dadurch gekennzeichnet**, daß das bewegliche Teil durch zwei Schlitten (71, 72) gebildet ist, die geeignet sind, gleichzeitig in einer Längsnut (61) eines festen Tisches in der einen oder der anderen Richtung unter der gekoppelten Wirkung von zwei peripheren Steuerungselementen (81, 82) zu gleiten, die nicht senkrecht verlaufen in Bezug zu der Achse eines Zylinders (80), auf dem sie ausgebildet sind, wobei der Zylinder (80) geeignet ist, sich entlang eines festen Gewindebolzens (64) zu bewegen, wenn ein Drehantrieb auf ihn ausgeübt wird, wobei die Steuerungselemente (81, 82) jeweils mit Nasen (71A und 72A) der Schlitten (71, 72), an denen die Übertragungsmittel (C1, C2) befestigt sind, in Eingriff stehen.

12. Vorrichtung nach einem der Ansprüche 1 und 2, **dadurch gekennzeichnet**, daß die Widerlager oder Spanner für die Umhüllungen der Seilzüge (C1, C2) mit dem beweglichen Teil (20) fest verbunden sind.

FIG.1

FIG.2

# FIG.3

# FIG.4

FIG.5A

FIG.5B

FIG.5C

FIG.5D

FIG.5E

FIG.5F

FIG.5G

FIG.5H

FIG.5I

FIG.5J

FIG.5K

# FIG.6A

# FIG.6B

# FIG.6C

# FIG.6D

# FIG.6E

# FIG.6F

# FIG.6G

# FIG.6H

# FIG.6I

# FIG.6J

# FIG.6K

FIG.7

FIG.8

## FIG.9

## FIG.10